(19) Europäisches Patentamt
European Patent Office
Office européen des brevets

(11) **EP 4 722 002 A1**

(12) **EUROPEAN PATENT APPLICATION**

(43) Date of publication:
**08.04.2026 Bulletin 2026/15**

(21) Application number: 25202300.7

(22) Date of filing: **15.09.2025**

(51) International Patent Classification (IPC):
**B60C 9/20** (2006.01) **B60C 11/03** (2006.01)
**B60C 11/12** (2006.01)

(52) Cooperative Patent Classification (CPC):
**B60C 9/20; B60C 11/0304; B60C 11/0332;**
**B60C 11/1236;** B60C 2009/016; B60C 2011/0358;
B60C 2011/0381; B60C 2011/039; B60C 2011/1245

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.10.2024 JP 2024173317**

(71) Applicant: **TOYO TIRE CORPORATION**
**Itami-shi,**
**Hyogo 6640847 (JP)**

(72) Inventor: **KUBO, Naoya**
**Itami-shi, Hyogo, 6640847 (JP)**

(74) Representative: **von Hirschhausen, Helge**
**Grosse - Schumacher -**
**Knauer - von Hirschhausen**
**Patent- und Rechtsanwälte**
**Nymphenburger Straße 14**
**80335 München (DE)**

(54) **PNEUMATIC TIRE**

(57) A pneumatic tire includes a tread (2). The tread (2) includes a pair of shoulder main grooves (12,13), and shoulder ribs (50,60) disposed further outward in the tire axial direction relative to the shoulder main grooves (12,13), respectively. Each of the shoulder ribs (50,60) includes a slit (51,61) that extends in a direction intersecting the shoulder main grooves (12,13) and terminates within the shoulder rib (50, 60). The slit (51, 61) has an inward end (51A, 61A) in the tire axial direction, and the inward end (51A, 61A) is disposed further inward in the tire axial direction relative to a contact end (E1, E2) of the tread (2). The tread (2) includes a contact patch having a rectangle ratio A of 0.6 or more and 0.7 or less.

Figure 2

EP 4 722 002 A1

**Description**

TECHNICAL FIELD

The present invention relates to a pneumatic tire.

BACKGROUND

A known pneumatic tire includes a tread having a pair of shoulder main grooves, and shoulder ribs disposed further outward in the tire axial direction, hereinafter referred to as axially outward or the axially outward direction, relative to the shoulder main grooves. Patent Literature 1 discloses a pneumatic tire including shoulder ribs having slits extending along the tire axial direction. A pneumatic tire having such slits achieves enhanced steering stability, for example.

CITATION LIST

PATENT LITERATURE

Patent Literature 1: JP 5667614 B

SUMMARY

Studies conducted by the present inventors have revealed that slits disposed in communication with the shoulder main grooves increase impacting sound generated in response to the shoulder ribs contacting the road surface, to thereby impair noise performance. Meanwhile, slits disposed not in communication with the shoulder main grooves tend to deteriorate drainage performance due to a decrease in groove volume. Thus, it is not easy to enhance noise performance while securing drainage performance.

A pneumatic tire in accordance with an embodiment of the present invention is a pneumatic tire including a tread. The tread includes a pair of shoulder main grooves, and shoulder ribs disposed further outward in the tire axial direction relative to the shoulder main grooves. Each of the shoulder ribs includes a slit that extends in a direction intersecting the shoulder main grooves and terminates within the shoulder rib. The slit has an inward end in the tire axial direction, and the inward end is disposed further inward in the tire axial direction relative to a contact end of the tread. The tread includes a contact patch having a rectangle ratio A of 0.6 or more and 0.7 or less.

The pneumatic tire of the present invention enhances noise performance while securing drainage performance.

BRIEF DESCRIPTION OF DRAWINGS

An embodiment of the present invention will be described based on the following figures, wherein:

FIG. 1 is a cross sectional view of a pneumatic tire according to an example embodiment;
FIG. 2 is a plan view of a tread of the pneumatic tire according to the example embodiment; and
FIG. 3 schematically illustrates the shape of a contact patch of the tread.

DESCRIPTION OF EMBODIMENTS

A pneumatic tire according to an embodiment of the present invention will be described in detail below by reference to the drawings. The embodiment described below is only an example, and the present invention is not limited to the example. Further, selective combinations of elements in the embodiment and modification examples described below fall within the range of the present invention.

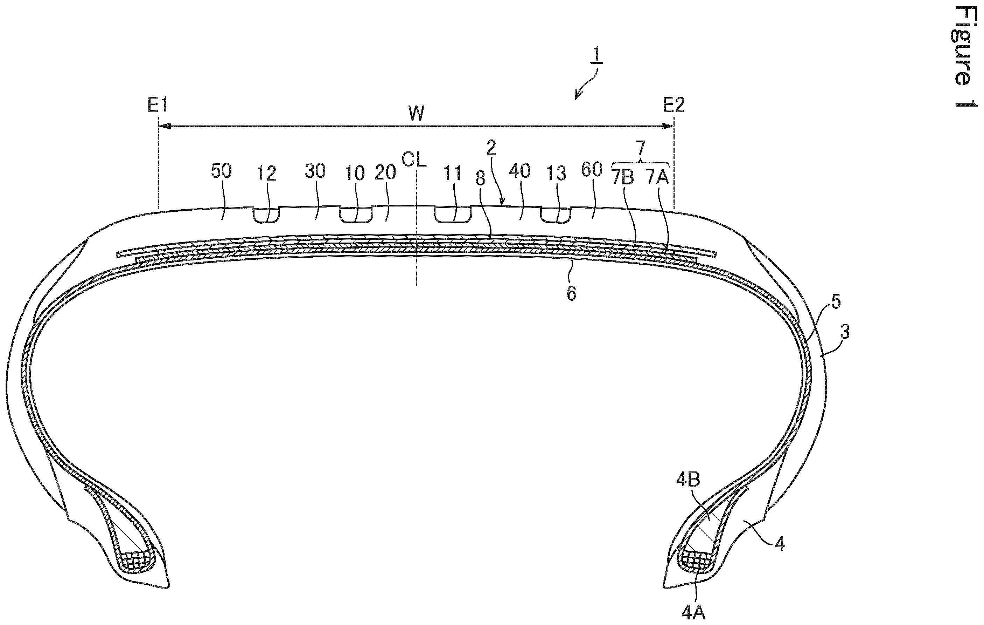

FIG. 1 schematically illustrates a cross section of a pneumatic tire 1 according to an embodiment of the present invention. As illustrated in FIG. 1, the pneumatic tire 1 includes a tread 2 that comes into contact with a road surface, a side wall 3 forming a tire side face, and a bead 4 to be secured to a rim of a wheel. The pneumatic tire 1 is suitable, for example, for summer tires of motor vehicles having high acceleration performance, such as electric vehicles (EV) and hybrid electric vehicles (HV), or sport utility vehicles (SUV) having a heavy weight.

The pneumatic tire 1 has a specified mounting direction with respect to a vehicle, and therefore has opposite mounting directions on the right and left sides of a vehicle. More specifically, the tread 2 has different tread patterns on left and right sides with respect to a tire equator or center line CL. The tire equator or center line CL as used herein refers to a virtual line passing the center, in the tire axial direction, of the tread 2 along the tire circumferential direction. In the present specification, the term "left and right," which is used for convenience of explanation, refers to left and right of the pneumatic tire 1 that is mounted on the vehicle, with respect to the traveling direction of the vehicle.

The tread 2 includes a pair of center main grooves 10 and 11, and a pair of shoulder main grooves 12 and 13 disposed further axially outward relative to the center main grooves 10 and 11, respectively. The four main grooves extend in straight lines along the tire circumferential direction without curving in the tire axial direction.

The tread 2 further includes a center rib 20 defined by the center main grooves 10 and 11 and disposed on the tire equator CL, a first middle rib 30 defined by the center main groove 10 and the shoulder main groove 12, and a second middle rib 40 defined by the center main groove 11 and the shoulder main groove 13. The tread 2 further includes a first shoulder rib 50 that is disposed opposite the first middle rib 30 in the tire axial direction, with the shoulder main groove 12 interposed between first shoulder rib 50 and the first middle rib 30, and a second shoulder rib 60 that is disposed opposite the second middle rib 40 in the tire axial direction, with the shoulder main groove 13 interposed between the second shoulder rib 60 and the second middle rib 40. The first shoulder rib 50 and the second shoulder rib 60 are formed beyond contact ends E1 and E2, respectively. The rib as used herein refers to a region raised outward in the tire radial direction, hereinafter referred to as radially outward, from the location corresponding to the bottom of the main groove, and is also referred to as a "land".

In the present specification, the contact ends E1 and E2 of the pneumatic tire 1 are defined as opposite ends in the tire axial direction of a region (contact patch) of an unused tire that is in contact with the flat road surface, when the tire is mounted on a normal rim and inflated to a normal internal pressure, and a predetermined load corresponding to 88% of the normal load is applied to the tire.

The "normal rim" as used herein refers to a rim defined according to the tire standard, and is a "standard rim" according to the Japanese Automobile Tire Manufacturing Association (JATMA), and a "Measuring Rim" according to the Tire and Rim Association (TRA) and the European Tire and Rim Technical Organization (ETRTO). The "normal internal pressure" is a "maximum air pressure" according to JATMA, the maximum value in Table "TIRE LOAD LIMITS AT VARIOUS COLD INFLATION PRESSURES" in TRA, and an "INFLATION PRESSURE" according to ETRTO. The normal internal pressure is typically 180 kPa for tires for passenger vehicles, but is 220 kPa for tires labeled with Extra Load or Reinforced. The "normal load" is a "maximum load rating" according to JATMA, the maximum value described in Table "TIRE LOAD LIMITS AT VARIOUS COLD INFLATION PRESSURES" according to TRA, and a "LOAD CAPACITY" according to ETRTO.

As will be described in detail below, the contact patch of the tread 2 according to the present embodiment has an approximately elliptical shape having a length (contact length) of the contact patch in the tire circumferential direction at a region near the contact ends E1 and E2 that is shorter than the contact length of the contact patch on the tire equator CL. More specifically, the tread 2 is designed such that a rectangle ratio A of the contact patch of the tread 2 is 0.6 or more and 0.7 or less.

The side wall 3 is disposed on each of the opposite sides of the tread 2 and is annularly formed along the tire circumferential direction. The side wall 3 is a portion of the pneumatic tire 1 which axially protrudes furthest outward, and is gently curved to protrude axially outward. The side wall 3 functions to prevent damage to a carcass 5. The side wall 3 is configured to be bent most in the event of cushioning operation of the pneumatic tire 1, and is typically made of pliant rubber having fatigue performance.

The bead 4 is disposed radially inward relative to the side wall 3 and is secured to the rim of the wheel. The bead 4 includes a bead core 4A and a bead filler 4B. The bead core 4A, which is composed of a steel bead wire, is an annular member extending along the entire circumference of the tire and is embedded in the bead 4. The bead filler 4B has a tapered shape extending radially outward and is an annular hard rubber member extending along the entire circumference of the tire.

The carcass 5 extends between a pair of beads 4 and is folded around the bead core 4A for engagement. The carcass 5 is composed of at least one carcass ply that is composed of carcass cords coated with a coating rubber. The carcass cord is disposed at a substantially right angle (80° or more and 90° or less, for example) with respect to the tire circumferential direction. Organic fiber used for the carcass cord includes, for example, polyester fiber, rayon fiber, aramid fiber, and nylon fiber.

An inner liner 6 covers the inner face of the tire between the pair of beads 4. The inner liner 6 is composed of air permeation resistant rubber and has a function to retain the air pressure of the pneumatic tire 1.

The pneumatic tire 1 further includes a belt 7 disposed radially outward of the carcass 5, and a cap ply 8 covering the radially outside of the belt 7 to reinforce the belt 7. The number of cap plies 8 may be one or two or more.

The belt 7 is disposed radially outward of the top portion of the carcass 5 in an overlapping manner with the outer circumferential face of the carcass 5. The belt 7 comprises a belt ply composed of cords arranged in an inclined direction with respect to the tire circumferential direction, which are covered with rubber. The material of the cords of the belt ply is not particularly limited and may be organic fiber such as polyester, rayon, nylon, or aramid, or a metal such as steel.

In the present embodiment, the belt 7 is composed of two belt plies 7A and 7B. The cords constituting the two belt plies 7A and 7B are disposed to intersect each other between the two belt plies 7A and 7B.

The angle (belt angle) of the cords constituting the two belt plies 7A and 7B with respect to the tire circumferential direction may be 22° or more and 30° or less, or 24° or more and 28° or less. The angle of the cords with respect to the tire circumferential direction within the above ranges facilitates control of the rectangle ratio A of the contact patch of to tread 2 to be 0.6 or more and 0.7 or less. This enables securing of drainage performance, which will be described below.

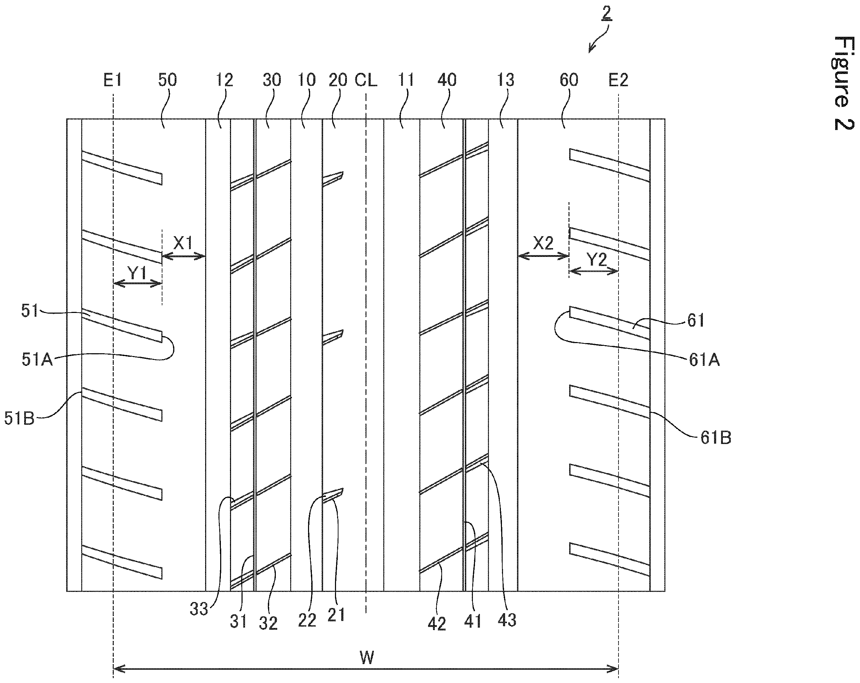

With reference to FIG. 2, the tread pattern of the pneumatic tire 1 will be described. FIG. 2 is a plan view of the tread 2 of the pneumatic tire 1.

As illustrated in FIG. 2, the tread 2 has an asymmetrical tread pattern with respect to the tire equator CL. The tread pattern of the pneumatic tire 1 remarkably exhibits the advantages of the present invention when the tire is mounted on the vehicle such that the side of the tire adjacent to the contact end E1 is located outward of the vehicle and the side of the tire adjacent to the contact end E2 is located inward of the vehicle.

The tread 2 includes the pair of center main grooves 10 and 11, and the pair of shoulder main grooves 12 and 13 disposed axially outward of the center main grooves 10 and 11, respectively. The center main groove 10 and the shoulder main groove 12 are disposed in a region that is closer to the contact end E1 relative to the tire equator CL, and the center main groove 11 and the shoulder main groove 13 are disposed in a region that is closer to the contact end E2 relative to the tire equator CL. The number of the main grooves is not limited to four, and may be three or less or five or more.

The center main grooves 10 and 11 and the shoulder main grooves 12 and 13 extend in straight lines along the tire circumferential direction without curving in the tire axial direction. This configuration allows water on the road surface to easily come into the center main grooves 10 and 11 and the shoulder main grooves 12 and 13 to thereby enhance drainage performance. At least one of the center main grooves 10 and 11 and the shoulder main grooves 12 and 13 may have a zigzag shape.

In the present embodiment, the center main grooves 10 and 11 have a greater width than the shoulder main grooves 12 and 13. This configuration enables further enhancement in drainage performance. Further, the center main grooves 10 and 11 have the same width and the shoulder main grooves 12 and 13 have the same width. The width of the center main grooves 10 and 11 is 6 mm or more and 15 mm or less, for example, and the width of the shoulder main grooves 12 and 13 is 5 mm or more and 14 mm or less, for example. The width of the shoulder main grooves 12 and 13 may be the same as the width of the center main grooves 10 and 11 or may be greater than the width of the center main grooves 10 and 11. In the present specification, the width of the groove refers to the width of a profile face of the tread 2 along the contact patch, unless otherwise specified.

The total width of the four main grooves may be, for example, 5% or more, and preferably 10% or more, of the length W from the contact end E1 to the contact end E2 along the tire axial direction, which will be hereinafter referred to as a "contact width W". This configuration enhances drainage performance. Further, the total width of the four main grooves may be, for example, 30% or less, and preferably 25% or less, of the contact width W. This configuration achieves excellent steering stability. Therefore, the total width of the four main grooves may be, for example, 5% or more and 30% or less, and preferably 10% or more and 25% or less, of the contact width W.

The center main grooves 10 and 11 and the shoulder main grooves 12 and 13 have the same depth, for example. The depth of the center main grooves 10 and 11 and the shoulder main grooves 12 and 13 is, for example, 7 mm or more and 15 mm or less. However, the center main grooves 10 and 11 and the shoulder main grooves 12 and 13 may have different depths.

At least one of the center main grooves 10 and 11 or the shoulder main grooves 12 and 13 typically includes a wear indicator (not shown). The wear indicator is a protrusion disposed on the groove bottom and serves as an indicator that confirms the wear level of the tread rubber.

The tread 2 further includes the center rib 20 defined by the center main grooves 10 and 11, the first middle rib 30 defined by the center main groove 10 and the shoulder main groove 12, and the second middle rib 40 defined by the center main groove 10 (11??) and the shoulder main groove 13. The tread 2 further includes the first shoulder rib 50 disposed opposite to the first middle rib 30 in the tire axial direction with the shoulder main groove 12 interposed between the first middle rib 30 and the first shoulder rib 50, and the second shoulder rib 60 disposed opposite to the second middle rib 40 in the tire axial direction with the shoulder main groove 13 interposed between the second middle rib 40 and the second shoulder rib 60. The center rib 20, the first middle rib 30, the second middle rib 40, the first shoulder rib 50, and the second shoulder rib 60 each extend continuously in the tire circumferential direction.

Center Rib 20

The center rib 20 is disposed on the tire equator CL. In the present embodiment, the center of the center rib 20 in the tire axial direction is located closer to the contact end E1 than the tire equator CL. The center rib 20 has a width that is 5% or more and 30% or less of the contact width W.

The center rib 20 includes sipes 21. The sipes 21 are disposed at predetermined intervals along the tire circumferential direction. In the present specification, a sipe refers to a groove having a groove width of 1.5 mm or less. The groove width does not include a width of a cut portion that will be described below.

The sipe 21 extends from the center main groove 10 toward the tire equator CL and terminates within the center rib 20. The sipe 21 further has a length that starts from the center main groove 10 and does not reach the tire equator CL. However, the sipe 21 may have a length that starts from the center main groove 10 and reaches the tire equator CL, or may extend from the center main groove 10 to the center main groove 11.

The length of the sipe 21 in the tire axial direction, which will be hereinafter referred to as the "axial length", may be, for example, 10% or more and 45% or less of the width of the center rib 20, and preferably, 20% or more and 45% or less of the width of the center rib 20. The width of the sipe 21 is 0.5 mm or more and 1.0 mm or less, for example. The sipe 21 typically has a smaller depth than the center main groove 10, and the depth of the sipe 21 is 60% or more and 90% or less of the width of the center main groove 10.

The sipe 21 extends in a direction that is inclined toward one side of the tire circumferential direction with respect to the tire axial direction. The angle of inclination of the sipe 21 with respect to the tire axial direction is 5° or more and 60° or less, for example, and may be 10° or more and 50° or less. The sipe 21 may have a zigzag shape.

In the center rib 20, a cut portion 22 is disposed along the edge of the sipe 21. The cut portion 22 is disposed such that the edge of the sipe 21 is chamfered and widened in a predetermined depth range from the contact patch of the tread 2. The cut portion 22 disperses the contact pressure acting on the edge of the sipe 21 to thereby contribute to an enhancement in traveling performance, for example. While the cut portion 22 may be disposed on both sides of the sipe 21 in the width direction, in the present embodiment, the sipe 21 is disposed only on one side of the sipe 21 in the width direction.

The slope face forming the cut portion 22 is, in a region having the maximum width, for example, inclined at an angle of 30° or more and 60° or less or 40° or more and 50° or less with respect to a profile face along the contact patch of the tread 2. This configuration enables further effective exhibition of the function of the cut portion, and also allows the slope face to contact the road surface to thereby prevent falling of the blocks at the time of harsh braking or rapid acceleration. The cut portion 22 may be disposed over the entire length of the sipe 21 and may have an increasing width as the cut portion 22 is closer to the center main groove 10. The cut portion 22 is formed within a depth range corresponding to 30% of the largest depth of the sipe 21 from the contact patch of the tread 2, for example. This configuration improves traveling performance without impairing durability of the center rib 20.

First Middle Rib 30

The first middle rib 30 is disposed opposite to the center rib 20 in the tire axial direction with the center main groove 10 interposed between the first middle rib 30 and the center rib 20. The first middle rib 30 is also disposed opposite to the first shoulder rib 50 in the tire axial direction with the shoulder main groove 12 interposed between the first middle rib 30 and the first shoulder rib 50. The width of the first middle rib 30 is 5% or more and 30% or less of the contact width W, for example.

The first middle rib 30 includes a sipe (circumferential sipe) 31 extending along the tire circumferential direction. The sipe 31 extends in a straight line along the tire circumferential direction without bending in the tire axial direction. The sipe 31 is disposed over the entire circumference in the tire circumference direction.

The sipe 31 is disposed closer to the contact end E1 with respect to the center portion of the first middle rib 30 in the tire axial direction. Thus, the width of a region of the first middle rib 30 closer to the contact end E1 from the sipe 31 is smaller than the width of a region of the first middle rib 30 closer to tire equator CL from the sipe 31. The width of the region of the first middle rib 30 closer to the contact end E1 from the sipe 31 is, for example, 20% or more and less than 50% of the width of the first middle rib 30. However, the sipe 31 may be disposed at the center portion of the first middle rib 30 in the tire axial direction.

The sipe 31 has a width of 0.5 mm or more and 1.0 mm or less, for example. The sipe 31 typically has a depth that is smaller than the depths of the center main groove 10 and the shoulder main groove 12. For example, the depth of the sipe 31 is 60% or more and 90% or less of the depth of the center main groove 10.

The first middle rib 30 includes, in addition to the sipe 31 extending along the tire circumferential direction, sipes (transverse sipes) 32 that extend across the first middle rib 30. The sipes 32 therefore extend from the shoulder main groove 12 to the center main groove 10. The sipes 32 are arranged at predetermined intervals in the tire circumferential direction.

The sipe 32 extends in a direction that is inclined toward one side of the tire circumferential direction with respect to the tire axial direction. The angle of inclination of the sipe 32 with respect to the tire axial direction is 5° or more and 60° or less, for example, and may be 10° or more and 50° or less. In the present embodiment, the angle of inclination of the sipe 32 with respect to the tire axial direction is substantially the same as the angle of inclination of the sipe 21 with respect to the tire axial direction.

The sipe 32 has a width that is 0.5 mm or more and 1.0 mm or less, for example. The width of the sipe 32 is substantially the same as the width of the sipe 31, for example. The sipe 32 has a depth that is 60% or more and 90% or less of the depth of the center main groove 10, for example. The sipe 32 may have a smaller depth than the sipe 31.

The number of sipes 32 may be greater than the number of sipes 21 in the center rib 20. Thus, the intervals of the sipes 32 in the tire circumferential direction may be smaller than the intervals of the sipes 21 in the tire circumferential direction.

In the first middle rib 30, a cut portion 33 is disposed along the edge of the sipe 32. The cut portion 33, similar to the cut portion 22 described above, is disposed such that the edge of the sipe 32 is chamfered and widened in a predetermined depth range from the contact patch of the tread 2. While the cut portion 33 may be disposed on each of the opposite sides of the sipe 32 in the width direction, in the present embodiment, the cut portion 33 is disposed only on one side of the sipe 32 in the width direction. The cut portion 33 distributes the contact pressure acting on the edge of the sipe 32 to thereby contribute to enhancement in traveling performance.

The cut portion 33 is disposed in a portion of the edge of the sipe 32 located between the shoulder main groove 12 and the sipe 31. In other words, the cut portion 33 is not disposed in a portion of the edge of the sipe 32 between the center main groove 10 and the sipe 31. This configuration facilitates securing of durability of the first middle rib 30.

The slope face forming the cut portion 33 is inclined at an angle of 30° or more and 60° or less, or 40° or more and 50° or less, with respect to the profile face along the contact patch of the tread 2 in a portion of the slope face having the largest width. This configuration allows the cut portion 33 to achieve its function more effectively. The cut portion 33 may have an increasing width as the cut portion 33 approaches the shoulder main groove 12. The cut portion 33 is formed within the depth range corresponding to 30% of the depth of the deepest portion of the sipe 32 from the contact patch of the tread 2, for example. This configuration improves traveling performance without impairing the durability of the first middle rib 30.

Second Middle Rib 40

The second middle rib 40 is disposed opposite to the center rib 20 in the tire axial direction with the center main groove 11 interposed between the second middle rib 40 and the center rib 20, and is also disposed opposite to the second shoulder rib 60 in the tire axial direction with the shoulder main groove 13 interposed between the second middle rib 40 and the second shoulder rib 60. The width of the second middle rib 40 is 5% or more and 30% or less of the contact width W, for example. In the present embodiment, the width of the second middle rib 40 is greater than the width of the first middle rib 30.

The second middle rib 40 includes a sipe (circumferential sipe) 41 extending along the tire circumferential direction. The sipe 41 extends in a straight line along the tire circumferential direction without bending in the tire axial direction. The sipe 41 is disposed over the entire circumference of the tire in the tire circumferential direction.

The sipe 41 is disposed closer to the contact end E2 with respect to the center portion of the second middle rib 40 in the tire axial direction. Thus, the width of a region of the second middle rib 40 closer to the contact end E1 from the sipe 41 is smaller than the width of a region of the second middle rib 40 closer to tire equator CL from the sipe 41. The width of the region of the second middle rib 40 closer to the contact end E2 from the sipe 41 is, for example, 20% or more and less than 50% of the width of the second middle rib 40. However, the sipe 41 may be disposed at the center portion of the second middle rib 40 in the tire axial direction.

The sipe 41 has a width of 0.5 mm or more and 1.0 mm or less, for example. The sipe 41 typically has a depth that is smaller than the depths of the center main groove 11 and the shoulder main groove 13. For example, the depth of the sipe 41 is 60% or more and 90% or less of the depth of the center main groove 11.

The second middle rib 40 includes, in addition to the sipe 41 extending along the tire circumferential direction, sipes (transverse sipes) 42 that extend across the second middle rib 40. The sipes 42 therefore extend from the center main groove 11 to the shoulder main groove 13. The sipes 42 are arranged at predetermined intervals in the tire circumferential direction.

The sipe 42 extends in a direction that is inclined toward one side of the tire circumferential direction with respect to the tire axial direction. The angle of inclination of the sipe 42 with respect to the tire axial direction is 5° or more and 60° or less, for example, and may be 10° or more and 50° or less. In the present embodiment, the angle of inclination of the sipe 42 with respect to the tire axial direction is substantially the same as the angle of inclination of the sipe 21 with respect to the tire axial direction.

The sipe 42 has a width that is 0.5 mm or more and 1.0 mm or less, for example. The width of the sipe 42 is substantially the same as the width of the sipe 41, for example. The sipe 42 has a depth that is 60% or more and 90% or less of the depth of the center main groove 11, for example. The sipe 42 may have a smaller depth than the sipe 41.

The number of sipes 42 may be greater than the number of sipes 21 in the center rib 20. Thus, the intervals of the sipes 42 in the tire circumferential direction may be smaller than the intervals of the sipes 21 in the tire circumferential direction.

In the second middle rib 40, a cut portion 43 is disposed along the edge of the sipe 42. The cut portion 43, similar to the cut portion 22 described above, is disposed such that the edge of the sipe 42 is chamfered and widened in a predetermined depth range from the contact patch of the tread 2. While the cut portion 43 may be disposed on each of the opposite sides of the sipe 42 in the width direction, in the present embodiment, the cut portion 43 is disposed only on one side of the sipe 42 in the width direction. The cut portion 43 distributes the contact pressure acting on the edge of the sipe 42 to thereby contribute to enhancement in traveling performance.

The cut portion 43 is disposed in a portion of the edge of the sipe 42 located between the shoulder main groove 13 and the sipe 41. In other words, the cut portion 43 is not disposed in a portion of the edge of the sipe 42 between the center main groove 11 and the sipe 41. This configuration facilitates securing of durability of the second middle rib 40.

The slope face forming the cut portion 43 is inclined at an angle of 30° or more and 60° or less, or 40° or more and 50° or less, with respect to the profile face along the contact patch of the tread 2 in a portion of the slope face having the largest width. This configuration allows the cut portion 43 to achieve its function more effectively. The cut portion 43 may have an increasing width as the cut portion 43 approaches the shoulder main groove 13. The cut portion 43 is formed within the depth range corresponding to 30% of the depth of the deepest portion of the sipe 42 from the contact patch of the tread 2, for example. This configuration improves traveling performance without impairing the durability of the second middle rib 40.

First Shoulder Rib 50

The first shoulder rib 50 is disposed opposite to the first middle rib 30 in the tire axial direction, with the shoulder main groove 12 being interposed between the first shoulder rib 50 and the first middle rib 30. The width of the contact patch of the first shoulder rib 50 is 10% or more and 30% or less of the contact width W, for example.

The first shoulder rib 50 includes a plurality of slits 51 extending in a direction intersecting the shoulder main groove 12 at circumferential intervals. In the present specification, a slit refers to a groove having a width of 2.0 mm or more, which is greater than the width of the sipe described above.

The slit 51 is not in communication with the shoulder main groove 12 and terminates within the first shoulder rib 50. Therefore, a region of the contact patch of the first shoulder rib 50 which is adjacent to the shoulder main groove 12 is continuous in the tire circumferential direction. This configuration significantly reduces the impacting sound generated by the first shoulder rib 50 contacting the road surface, resulting in an enhancement in noise performance. In other words, the slits 51 communicating with the shoulder main groove 12 would make the contact patch of the first shoulder rib 50 circumferentially non-continuous to thereby increase the impacting sound generated by contact of the first shoulder rib 50 with the road surface and deteriorate noise performance.

The slit 51 has an inward end 51A in the tire axial direction, which will be hereinafter referred to as an "axially inward end 51A", located further axially inward relative to the contact end E1. The slit 51 further has an outward end 51B in the tire axial direction, which will be hereinafter referred to as an "axially outward end 51B", located further axially outward relative to the contact end E1. Thus, the slit 51 is disposed across the contact end E1.

The number of slits 51 is, for example, the same as the number of sipes 32 in the first middle rib 30. In the present embodiment, the slit 51 has a substantially uniform width over the entire length of the slit 51. The maximum width of the slit 51 may be 2.0 mm or more and 6.0 mm or less, or 2.5 mm or more and 5.5 mm or less. This configuration secures durability of the first shoulder rib 50 and also enhances drainage performance. However, the slit 51 may have a decreasing width axially inward or an increasing width axially outward. The depth of the slit 51 may be substantially the same as the depth of the shoulder main groove 12 or may be 60% or more and 95% or less of the depth of the shoulder main groove 12, in the deepest region of the slit 51.

The axial length of the slit 51 from the axially inward end 51A to the axially outward end 51B may be, for example, 30% or more and 80% or less, or 40% or more and 70% or less, of the width of the first shoulder rib 50.

It is assumed that the axial length from the axially outward end of the shoulder main groove 12 to the axially inward end 51A of the slit 51 is X1 [mm]. It is further assumed that the axial length from contact end E1 to the axially inward end 51A of the slit 51 is Y1 [mm]. In this case, a ratio (Y1/X1) of the length Y1 [mm] with respect to the length X1 [mm] is preferably 0.3 or more, more preferably 0.4 or more, and further preferably 0.5 or more. The ratio (Y1/X1) of 0.3 or more increases the volume of the grooves of the slit 51 to thereby enhance drainage performance.

The ratio (Y1/X1) of the length Y1 [mm] with respect to the length X1[mm] is also preferably 5.0 or less, more preferably 3.0 or less, and further preferably 2.0 or less. The ratio (Y1/X1) of 5.0 or less enables creation of a region in which the contact patch of the first shoulder rib 50 is circumferentially continuous in the vicinity of the shoulder main groove 12. This configuration further enhances noise performance. Therefore, the ratio (Y1/X1) of the length Y1 [mm] with respect to the length X1 [mm] is preferably 0.3 or more and 5.0 or less, more preferably 0.4 or more and 3.0 or less, and further preferably 0.5 or more and 2.0 or less. The ratio (Y1/X1) of the length Y1 [mm] with respect to the length X1 [mm] may be 0.3 or more and 3.0 or less, 0.3 or more and 2.0 or less, 0.4 or more and 5.0 or less, 0.4 or more and 2.0 or less, 0.5 or more and 5.0 or less, or 0.5 or more and 3.0 or less.

The axial length X1 [mm] from the axially outward end of the shoulder main groove 12 to the axially inward end 51A of the slit 51 is preferably 10 or more and 25 or less, and more preferably 12 or more and 20 or less. This configuration secures drainage performance and also enhances noise performance.

The axial length Y1 [mm] from the contact end E1 to the axially inward end 51A of the slit 51 is preferably 15 or more and 30 or less and more preferably 15 or more and 25 or less. This configuration secures drainage performance and also enhances noise performance.

The slit 51 extends in a direction inclined with respect to the tire axial direction. The angle of inclination of the slit 51 with respect to the tire axial direction is, for example, 5° or more and 60° or less, and may be 10° or more and 50° or less. In the present embodiment, the angle of inclination of the slit 51 with respect to the tire axial direction is substantially the same as the angle of inclination of the sipes 21, 32, and 42 with respect to the tire axial direction. The slit 51 is axially inclined in an opposite direction to that of the sipes 21, 32, and 42.

Second Shoulder Rib 60

The second shoulder rib 60 is disposed opposite to the second middle rib 40 in the tire axial direction, with the shoulder main groove 13 being interposed between the second shoulder rib 60 and the second middle rib 40. The width of the contact patch of the second shoulder rib 60 is 10% or more and 30% or less of the contact width W, for example.

The second shoulder rib 60 includes a plurality of slits 61 extending in a direction intersecting the shoulder main groove 13 at circumferential intervals. The slit 61 has a shape similar to that of the slit 51 in the first shoulder rib 50. The number of slits 61 is the same as the number of sipes 42 disposed in the second middle rib 40.

The slit 61, similar to the slit 51, is not in communication with the shoulder main groove 13 and terminates within the second shoulder rib 60. Therefore, a region of the contact patch of the first shoulder rib 60 which is adjacent to the shoulder main groove 13 is continuous in the tire circumferential direction. This configuration significantly reduces the impacting sound generated by the second shoulder rib 60 contacting the road surface, thereby enhancing noise performance.

The slit 61 has an inward end 61A in the tire axial direction, which will be hereinafter referred to as an "axially inward end 61A", located further axially inward relative to the contact end E2. The slit 61 further has an outward end 61B in the tire axial direction, which will be hereinafter referred to as an "axially outward end 61B", located further axially outward relative to the contact end E2. Thus, the slit 61 is disposed across the contact end E2.

The axial length of the slit 61 from the axially inward end 61A to the axially outward end 61B may be, for example, 30% or more and 80% or less, or 40% or more and 70% or less, of the width of the second shoulder rib 60.

It is assumed that the axial length from the axially outward end of the shoulder main groove 13 to the axially inward end 61A of the slit 61 is X2 [mm]. It is further assumed that the axial length from the contact end E2 to the axially inward end 61A of the slit 61 is Y2 [mm]. In this case, a ratio (Y2/X2) of the length Y2 [mm] with respect to the length X2 [mm] is, similar to the ratio (Y1/X1) of the slit 51, preferably 0.3 or more, more preferably 0.4 or more, and further preferably 0.5 or more. The ratio (Y2/X2) of 0.3 or more increases the volume of the grooves of the slit 61 to thereby enhance drainage performance.

The ratio (Y2/X2) of the length Y2 [mm] with respect to the length X2[mm] is, similar to the ratio (Y1/X1) of the slit 51, preferably 5.0 or less, more preferably 3.0 or less, and further preferably 2.0 or less. The ratio (Y2/X2) of 5.0 or less enables creation of a region in which the contact patch of the second shoulder rib 60 is circumferentially continuous in the vicinity of the shoulder main groove 13. This configuration further enhances noise performance. Therefore, the ratio (Y2/X2) of the length Y2 [mm] with respect to the length X2 [mm] is preferably 0.3 or more and 5.0 or less, more preferably 0.4 or more and 3.0 or less, and further preferably 0.5 or more and 2.0 or less. The ratio (Y2/X2) of the length Y2 [mm] with respect to the length X2 [mm] may be 0.3 or more and 3.0 or less, 0.3 or more and 2.0 or less, 0.4 or more and 5.0 or less, 0.4 or more and 2.0 or less, 0.5 or more and 5.0 or less, or 0.5 or more and 3.0 or less.

The axial length X2 [mm] from the axially outward end of the shoulder main groove 13 to the axially inward end 61A of the slit 61 is, similar to the length X1 [mm], preferably 10 or more and 25 or less, and more preferably 12 or more and 20 or less. This configuration secures drainage performance and also enhances noise performance.

The axial length Y2 [mm] from the contact end E2 to the axially inward end 61A of the slit 61 is, similar to the length Y1 [mm], preferably 15 or more and 30 or less and more preferably 15 or more and 25 or less. This configuration secures drainage performance and also enhances noise performance.

The slit 61 extends in a direction that is inclined with respect to the tire axial direction. The angle of inclination of the slit 61 with respect to the tire axial direction is, for example, 5° or more and 60° or less, and may be 10° or more and 50° or less. In the present embodiment, the angle of inclination of the slit 61 with respect to the tire axial direction is substantially the same as the angle of inclination of the sipes 21, 32, and 42 with respect to the tire axial direction. The slit 61 is axially inclined in the opposite direction to that of the sipes 21, 32, and 42. In other words, the slit 61 is inclined in the opposite direction to the slit 51 with respect to the tire axial direction.

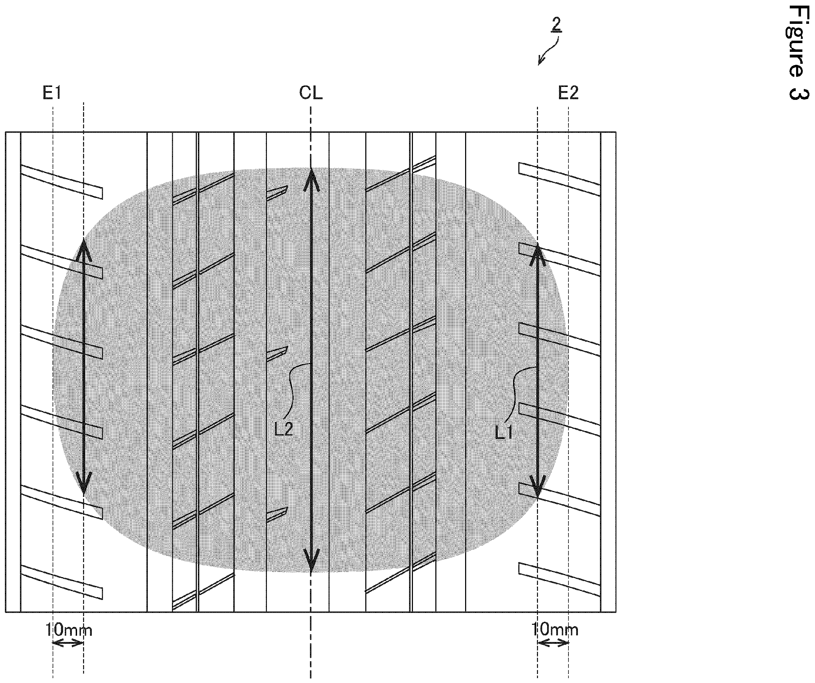

With reference to FIG. 3, the shape of the contact patch of the tread 2 will be described in further detail below. FIG. 3 schematically illustrates the shape of the contact patch of the tread 2.

As illustrated in FIG. 3, the contact patch of the tread 2 has a contact length (L1) adjacent to the contact ends which is smaller than a contact length (L2) on the tire equator CL, and thus has a shape similar to an elliptical shape. The contact length (L2) as used herein refers to a length of the contact patch in the tire circumferential direction on the tire equator CL of the unused pneumatic tire 1 that is mounted on the normal rim and has a tire internal pressure of 260 kPa and a load of 520 kg. The contact length (L1) as used herein refers to a length, obtained under the above measurement condition, of the contact patch in the tire circumferential direction at locations that are 10 mm axially inward from the opposite ends of the contact patch in the tire axial direction.

Here, a rectangle ratio A of the contact patch of that tread 2, which is the ratio (L1/L2) of the length L1 with respect to the length L2, is 0.6 or more and 0.7 or less. In the present embodiment, the slits 51 and 61 are not in communication with the shoulder main groove 12 and 13, respectively. This configuration enhances noise performance. Meanwhile, the configuration of the tread in which the slits 51 and 61 are not in communication with the shoulder main grooves 12 and 13, respectively, makes it difficult to discharge the water on the road surface through the slits 51 and 61 and deteriorates the drainage performance. Thus, it is not possible to enhance noise performance while maintaining drainage performance simply by making the slits 51 and 61 not in communication with the shoulder main grooves 12 and 13, respectively.

After repeated studies for addressing the above issue, the present inventors have revealed that it is possible to enhance noise performance while maintaining drainage performance in a tread pattern in which the slits 51 and 61 are not in communication with the shoulder main grooves 12 and 13, by controlling the rectangle ratio A of the contact patch of the tread 2 to 0.6 or more and 0.7 or less. The configuration of tread 2 having the contact patch with the rectangle ratio A that is controlled to be 0.6 or more and 0.7 or less allows water on the road surface to be distributed effectively to the left and right along the outline of the contact patch of the tread 2, thereby enhancing drainage performance.

While the rectangle ratio A of the contact patch of the tread 2 may be 0.6 or more and 0.7 or less, it is preferably 0.62 or more and 0.68 or less. This configuration enables establishment of both drainage performance and noise performance at a high level. When the rectangle ratio A is less than 0.6, steering stability may be lowered.

The axial length X1 from the axially outward end of the shoulder main groove 12 to the axially inward end 51A of the slit 51, the axial length X2 from the axially outward end of the shoulder main groove 13 to the axially inward end 61A of the slit 61, and the rectangle ratio A may satisfy the following expressions (I) and (II). The configuration in which X1, X2, and A satisfy the following expressions (I) and (II) enables establishment of both drainage performance and noise performance at a high level.

$$\text{Expression (I): } X1/(1-A) \leqq 60$$

$$\text{Expression (II): } X2/(1-A) \leqq 60$$

Methods for controlling the rectangle ratio A of the contact patch of the tread 2 include, for example, a method for adjusting the angle (belt angle) of the cords constituting the belt plies 7A and 7B with respect to the tire circumferential direction. Specifically, adjusting the angle (belt angle) of the cords constituting the belt plies 7A and 7B with respect to the tire circumferential direction to 22° or more and 30° or less facilitates controlling the rectangle ratio A of the contact patch of the tread 2 to 0.6 or more and 0.7 or less.

The methods for controlling the rectangle ratio A of the contact patch of the tread 2 further include, for example, a method for adjusting the length of belt 7 in the tire axial direction, which will be referred to as the "axial length". Increasing the axial length of the belt 7 to thereby increase the restraint force acting on the axially outward side of the belt 7 enables a decrease in the rectangle ratio A. It is also possible to provide a reinforcing layer, such as an edge ply, that reinforces the strength of the belt 7, on the axially outward side of the belt 7 to thereby increase the restraint force acting on the axially outward side of the belt 7.

Examples

The present invention will be further described below according to examples; however, the present invention is not limited to these examples.

<Example 1>

A pneumatic tire (tire size: 235/50R20 104V) having a tread pattern illustrated in FIG. 2 was produced. The length X1, the length X2, the length Y1, the length Y2, and the belt angle were adjusted to the values shown in Table 1. The produced pneumatic tire that was mounted on a normal rim had a rectangle ratio A of the contact patch of the tread 2 of 0.675, under the conditions of an tire internal pressure of 260 kPa and a load of 520 kg. Further, the shape of the tread pattern, for example, is as follows:

Contact Width W: 180 mm
Entire Length of Slits 51 and 61: 31 mm
Groove Width of Slits 51 and 61: 3.3 to 5.4 mm

Examples 2 to 4 and Comparative Examples 1 to 5

Pneumatic tires were produced in a manner similar to that of the pneumatic tire of Example 1 except that the lengths X1, the lengths X2, the lengths Y1, the lengths Y2, and the belt angles were adjusted to the respective values shown in Table 1. The value of the rectangle ratio A of each pneumatic tire is indicated in Table 1.

Evaluation of Noise Performance

Each of the produced pneumatic tires was mounted on a test vehicle, and sound pressure was measured when each test vehicle traveled at 80 km/h on a dry flat asphalt road surface, with a microphone disposed at the location of a driver's ear on the driver's seat in the vehicle cabin. Table 1 shows the evaluation results relative to the evaluation value of 100 in Comparative Example 1. The greater the numerical value of the evaluation result, the greater the pattern noise reduction effect and the higher the noise performance.

Evaluation of Drainage Performance

Each of the produced pneumatic tires was revolved on a wet road surface with a water depth of 8 mm for hydroplaning, and the vehicle speed at the time of hydroplaning was measured. Table 1 shows the evaluation results relative to the evaluation value of 100 in Comparative Example 1. The greater the numerical value, the higher the speed at the time of hydroplaning and the higher the drainage performance.

Tire mounting conditions: Air Pressure: 260kPa, and Load: 520 kgf (single wheel)

Pneumatic tires with poor drainage performance do not catch up with drainage of water from within the contact patch contacting with the road surface during traveling. The water remaining on the tire forms a water film between the road surface and the tire tread, which causes the tire to lose contact with the road surface and causes the hydroplaning phenomenon. Therefore, the vehicle speed at the time of occurrence of the hydroplaning phenomenon was measured as an index of drainage performance.

Table 1 shows the evaluation results of noise performance and drainage performance of the respective pneumatic tires. Table 1 also shows the lengths X1, the lengths X2, the lengths Y1, the lengths Y2, the belt angles, and the rectangle ratios A of the respective pneumatic tires.

[Table 1]

| | TIRE SHAPE | | | | | | | | EVALUATION RESULTS | |
|---|---|---|---|---|---|---|---|---|---|---|
| | LENGTH X1, X2 [mm] | LENGTH Y1, Y2 [mm] | BELT ANGLE [° ] | RECTANG LE RATIO A | Y1/X1 | Y2/X2 | X1/(1-A) | X2/(1-A) | NOISE PERFORMAN CE (RELATIVE VALUE) | DRAINAGE PERFORMAN CE (RELATIVE VALUE) |
| EXAMPLE 1 | 10 | 17 | 26 | 0.675 | 1.7 | 1.7 | 31 | 31 | 103 | 101 |
| EXAMPLE 2 | 20 | 7 | 26 | 0.675 | 0.35 | 0.35 | 62 | 62 | 106 | 100 |
| EXAMPLE 3 | 10 | 17 | 28 | 0.625 | 1.7 | 1.7 | 27 | 27 | 103 | 102 |
| EXAMPLE 4 | 20 | 7 | 28 | 0.625 | 0.35 | 0.35 | 53 | 53 | 106 | 101 |
| COMPARATIVE EXAMPLE 1 | 0 | 27 | 24 | 0.725 | - | - | 0 | 0 | 100 | 100 |
| COMPARATIVE EXAMPLE 2 | 10 | 17 | 24 | 0.725 | 1.7 | 1.7 | 36 | 36 | 103 | 99 |
| COMPARATIVE EXAMPLE 3 | 20 | 7 | 24 | 0.725 | 0.35 | 0.35 | 73 | 73 | 106 | 98 |
| COMPARATIVE EXAMPLE 4 | 0 | 27 | 26 | 0.675 | - | - | 0 | 0 | 100 | 102 |
| COMPARATIVE EXAMPLE 5 | 0 | 27 | 28 | 0.625 | - | - | 0 | 0 | 100 | 103 |

As shown in Table 1, the pneumatic tires according to Examples had increased noise performance while securing drainage performance. Further, the pneumatic tires according to Examples 1, 3, and 4 which satisfy the conditions X1/(1-A) ≦ 60 and X2/(1-A) ≦60 had higher drainage performance than the pneumatic tire according to Example 2 which does not satisfy the conditions X1/(1-A) ≦ 60 or X2/(1-A) ≦60.

Meanwhile, the pneumatic tires according to Examples 2 and 3 not having the rectangle ratio A of 0.6 or more and 0.7 or less have lowered drainage performance even when the slits 51 and 61 are not in communication with the shoulder main grooves 12 and 13, respectively. Further, the pneumatic tires according to Comparative Examples 4 and 5 having the rectangle ratio A of 0.6 or more and 0.7 or less but including the slits 51 and 61 that are in communication with the shoulder main grooves 12 and 13, respectively do not have improved noise performance.

According to the above results, it is possible to enhance noise performance while securing drainage performance, by controlling the rectangle ratio A of the contact patch of the tread 2 to 0.6 or more and 0.7 or less in the tread pattern in which the slits 51 and 61 are not in communication with the shoulder main grooves 12 and 13, respectively.

REFERENCE SIGNS LIST

1 pneumatic tire, 2 tread, 3, side wall, 4 bead, 4A bead core, 4B bead filler, 5 carcass, 6 inner liner, 7 belt, 7A, 7B belt ply, 8 cap ply, 10, 11 center main groove, 12, 13 shoulder main groove, 20 center rib, 21 sipe, 22 cut portion, 30 first middle rib, 31, 32 sipe, 33 cut portion, 40 second middle rib, 41,42 sipe, 43 cut portion, 50 first shoulder rib (shoulder rib), 51,61 slit, 51A, 61A axially inward end, 51B, 61B axially outward end, 60 second shoulder rib (shoulder rib), A rectangle ratio, CL tire equator or center line, W contact width, E1,E2 contact end

**Claims**

1.   A pneumatic tire (1) comprising a tread,

the tread (2) including a pair of shoulder main grooves (12,13) and shoulder ribs (50,60) disposed further outward in the tire axial direction relative to the shoulder main grooves (12,13), wherein
each of the shoulder ribs (50,60) includes a slit (51,61) that extends in a direction intersecting the shoulder main groove (12,13) and terminates within the shoulder rib (50,60),
the slit (51,61) has an inward end (51A,61A) in the tire axial direction, the inward end (51A,61A) being disposed further inward in the tire axial direction relative to a contact end (E1,E2) of the tread (2), and
the tread (2) includes a contact patch having a rectangle ratio A of 0.6 or more and 0.7 or less.

2.   The pneumatic tire (1) according to claim 1, wherein
a ratio (Y/X) of a length Y [mm] with respect to a length X [mm] is 0.3 or more and 5.0 or less, where the length X [mm] is a length along the tire axial direction from an axially outward end of the shoulder main groove (12,13) to an axially inward end (51A,61A) of the slit (51,61), and the Y length [mm] is a length along the tire axial direction from the contact end (E1,E2) of the tread (2) to the axially inward end (51A,61A) of the slit (51,61).

3.   The pneumatic tire (1) according to claim 2, wherein
the ratio (Y/X) of the length Y [mm] with respect to the length X [mm] is 0.3 or more and 2.0 or less.

4.   The pneumatic tire (1) according to any one of claims 1 to 3, wherein
the length X [mm] and the rectangle ratio A satisfy a relationship represented by the following expression:

$$X/(1\text{-}A) \leqq 60$$

5.   The pneumatic tire (1) according to any one of claims 1 to 4, wherein
a length X [mm] along the tire axial direction from an axially outward end of the shoulder main groove (12,13) to the axially inward end (51A,61A) of the slit (51,61) is 10 or more and 25 or less.

6.   The pneumatic tire (1) according to any one of claims 1 to 5, wherein
a length Y [mm] along the tire axial direction from the contact end (E1,E2) of the tread (2) to the axially inward end (51A,61A) of the slit (51,61) is 15 or more and 30 or less.

7.   The pneumatic tire (1) according to any one of claims 1 to 6, wherein

the slit (51,61) has a maximum width of 2.0 mm or more and 6.0 mm or less.

8. The pneumatic tire (1) according to any one of claims 1 to 7, further comprising:

a carcass (5); and
a belt (7) disposed outward of the carcass (5) in a tire radial direction, the belt (7) comprising at least one belt ply (7A,7B) having cords arranged in an inclined manner with respect to a circumferential direction of the tire, wherein an angle of the cords with respect to the tire circumferential direction is 22° or more and 30° or less.

9. The pneumatic tire (1) according to claim 8, wherein
the angle of the cords with respect to the tire circumferential direction is 24° or more and 28° or less.

10. The pneumatic tire (1) according to any one of claims 1 to 9, wherein
the tread further comprises:

a pair of center main grooves (10,11);
a center rib (20) that is defined by the pair of center main grooves (10,11); and
a first middle rib (30) and a second middle rib (40) that are defined by the center main grooves (10,11) and the shoulder main grooves (12,13), respectively.

11. The pneumatic tire (1) according to claim 10, wherein

the first middle rib (30) includes a plurality of transverse sipes (32) extending across the first middle rib (30), and
the number of slits (51) disposed in the shoulder rib (50) is the same as the number of transverse sipes (32) in the first middle rib (30).

12. The pneumatic tire (1) according to claim 10, wherein

the first middle rib (30) includes a circumferential sipe (31) extending along a tire circumferential direction, and
the circumferential sipe (31) is disposed closer to the contact end (E1) relative to a center portion of the first middle rib (30) in the tire axial direction.

# Figure 1

Figure 1

# Figure 2

Figure 3

Europäisches
Patentamt

European
Patent Office

Office européen
des brevets

# EUROPEAN SEARCH REPORT

**Application Number**

EP 25 20 2300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 424 751 B1 (SUMITOMO RUBBER IND [JP]) 7 April 2021 (2021-04-07) * paragraphs [0008], [0030]; figures 2,4,5; examples 1,2 * | 1-9 | INV. B60C9/20 B60C11/03 B60C11/12 |
| X | JP 2010 132181 A (SUMITOMO RUBBER IND) 17 June 2010 (2010-06-17) | 1-6,10 | |
| Y | * paragraphs [0013], [0060]; figure 5 * | 11,12 | |
| X | WO 2014/129601 A1 (YOKOHAMA RUBBER CO LTD [JP]) 28 August 2014 (2014-08-28) * figure 2 * | 1-7 | |
| X | DE 10 2021 132515 A1 (SUMITOMO RUBBER IND [JP]) 14 July 2022 (2022-07-14) * figure 1 * | 1-7 | |
| A | JP 2012 136188 A (SUMITOMO RUBBER IND) 19 July 2012 (2012-07-19) * paragraphs [0015], [0042], [0043]; figure 3; example 7 * | 1-12 | **TECHNICAL FIELDS SEARCHED (IPC)** |
| Y | JP 2016 113003 A (YOKOHAMA RUBBER CO LTD) 23 June 2016 (2016-06-23) * figure 2 * | 11,12 | B60C |

The present search report has been drawn up for all claims

| Place of search | Date of completion of the search | Examiner |
|---|---|---|
| Munich | 12 February 2026 | Brito, Fernando |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 20 2300

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| EP 3424751 | B1 | 07-04-2021 | CN | 109203865 A | 15-01-2019 |
| | | | EP | 3424751 A1 | 09-01-2019 |
| | | | JP | 6879086 B2 | 02-06-2021 |
| | | | JP | 2019014313 A | 31-01-2019 |
| | | | US | 2019009615 A1 | 10-01-2019 |
| JP 2010132181 | A | 17-06-2010 | CN | 101746213 A | 23-06-2010 |
| | | | JP | 4729096 B2 | 20-07-2011 |
| | | | JP | 2010132181 A | 17-06-2010 |
| WO 2014129601 | A1 | 28-08-2014 | CN | 105026179 A | 04-11-2015 |
| | | | DE | 112014000952 T5 | 05-11-2015 |
| | | | JP | 2014162300 A | 08-09-2014 |
| | | | US | 2016009137 A1 | 14-01-2016 |
| | | | WO | 2014129601 A1 | 28-08-2014 |
| DE 102021132515 | A1 | 14-07-2022 | DE | 102021132515 A1 | 14-07-2022 |
| | | | JP | 2022109076 A | 27-07-2022 |
| JP 2012136188 | A | 19-07-2012 | JP | 5986352 B2 | 06-09-2016 |
| | | | JP | 2012136188 A | 19-07-2012 |
| JP 2016113003 | A | 23-06-2016 | NONE | | |

EPO FORM P0459

For more details about this annex : see Official Journal of the European Patent Office, No. 12/82

**EP 4 722 002 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5667614 B